# FASCICULE DE BREVET EUROPEEN

(11) **EP 2 179 969 B1**
(45) Date de publication et mention de la délivrance du brevet: **15.01.2020**
(21) Numéro de dépôt: 09173400.4
(22) Date de dépôt: 19.10.2009
(51) Int. Cl.: C02F 1/00, C02F 1/50

(54) **Reservoir de stockage d'un liquide**
Speicherbehälter für eine Flüssigkeit
Liquid storage tank

(30) Priorité: 22.10.2008 FR 0857172
(43) Date de publication de la demande: 28.04.2010
(73) Titulaire: ALSTOM Transport Technologies, 93400 Saint-Ouen (FR)
(72) Inventeur: Tachet, Valentin, 17000 La Rochelle (FR); Kondyra, Emmanuel, 17000 La Rochelle (FR)
(74) Mandataire: Lavoix

(56) Documents cités:
- GB-A- 2 419 590
- US-A1- 2005 252 844
- US-B1- 6 207 047

## Description

L'invention concerne un réservoir de stockage d'un liquide comportant :
- une cuve de stockage dudit liquide constituée à sa surface interne d'un matériau moins réducteur que le cuivre ou qu'un alliage cuivreux,
- au moins un moyen bactéricide offrant une surface de contact avec ledit liquide, ladite surface de contact étant constituée de cuivre ou d'un alliage cuivreux.

Dans un tel réservoir, le cuivre de la surface de contact s'oxyde au contact du liquide et les ions de cuivre ainsi créés viennent désactiver et / ou tuer les bactéries contenues dans le liquide et donc empêcher la prolifération des bactéries dans ce liquide.

Un tel réservoir permet d'éviter la prolifération des bactéries dans un liquide sans apport d'énergie et d'éviter un traitement chimique du liquide.

Du document JP2008067728, on connaît un tel réservoir. Ce réservoir est destiné à purifier de l'urine contenue dans une cuve. Le moyen bactéricide se trouve sous la forme d'un élément constitué de fibres de cuivres de 10 à 500 micromètres. Cet élément est introduit à l'intérieur de la cuve afin de supprimer les mauvaises odeurs et d'éliminer les bactéries contenues dans l'urine.

Le moyen bactéricide est apte à être utilisé plusieurs fois car il est possible de laver l'élément fibreux en cuivre, à l'eau.

Cependant un tel réservoir n'est pas suffisamment performant pour empêcher la prolifération des bactéries dans une cuve apte à être remplie et vidangée une multitude de fois. En effet, lors de l'oxydation du cuivre, il se forme une couche d'oxyde de cuivre à la surface du moyen bactéricide en cuivre. Cette couche empêche l'oxydation du cuivre et le moyen bactéricide perd ses propriétés bactéricides. Il est nécessaire de supprimer cette couche d'oxyde de cuivre pour que le moyen bactéricide à base de cuivre conserve ses propriétés bactéricides.

Or, un lavage à l'eau ne permet pas d'enlever la couche d'oxyde de cuivre.

Un but de l'invention est de proposer un réservoir de stockage qui ne comporte pas les inconvénients précités.

Un autre but de l'invention est de proposer un réservoir de stockage d'un liquide dans lequel il est possible de conserver un liquide à moindre coût.

A cet effet, l'invention a pour objet un réservoir de stockage selon la revendication 1.

Selon d'autres modes de réalisation, le réservoir de stockage d'un liquide possède une ou plusieurs des caractéristiques des revendications dépendantes 2 à 12, prise(s) isolément ou selon toutes les combinaisons techniquement possibles.

L'invention a en outre pour objet un procédé de stockage d'un liquide dans un réservoir de stockage d'un liquide tel que défini ci-dessus, selon la revendication 13.

Selon d'autres modes de réalisation, le réservoir de stockage d'un liquide possède une ou plusieurs des caractéristiques des revendications dépendantes 14 ou 15, prise(s) isolément ou selon toutes les combinaisons techniquement possibles.

D'autres aspects et avantages de l'invention apparaîtront à la lecture de la description qui suit, donnée à titre d'exemple, et faite en référence aux dessins annexés, sur lesquels :
- La Fig. 1 est une vue en perspective d'un réservoir selon l'invention.
- La Fig. 2 est une vue de côté, depuis l'intérieur d'une cuve, d'un réservoir selon l'invention.

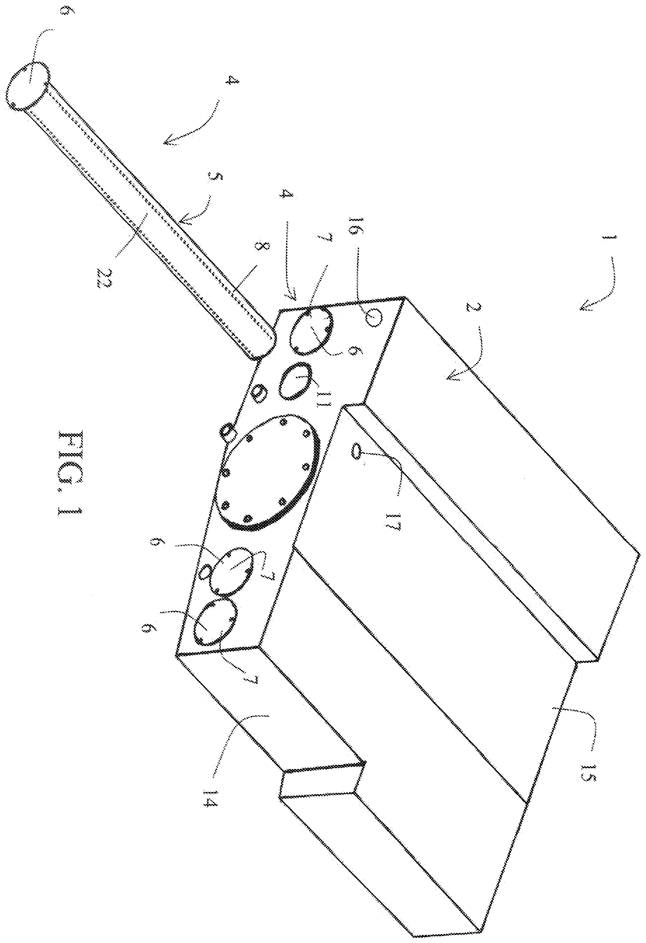

Sur la figure 1, on a représenté une vue en perspective du réservoir de stockage d'un liquide 3 contenu dans une cuve 2.

La cuve 2 est, par exemple, installée dans des sanitaires, notamment dans des sanitaires d'un véhicule ferroviaire, afin de stocker un liquide, par exemple de l'eau potable.

Dans les sanitaires d'un véhicule ferroviaire, on stocke notamment de l'eau potable pour la consommation des passagers.

Dans la suite de la description on décrira un réservoir 1 de stockage d'eau potable 3 mais l'invention peut s'appliquer à un réservoir contenant tout autre liquide plus oxydant que le cuivre.

La cuve 2 es remplie d'eau par l'orifice 1 6. L'eau ainsi stockée est susceptible d'être puisée depuis l'orifice 17 pour alimenter un robinet d'eau potable.

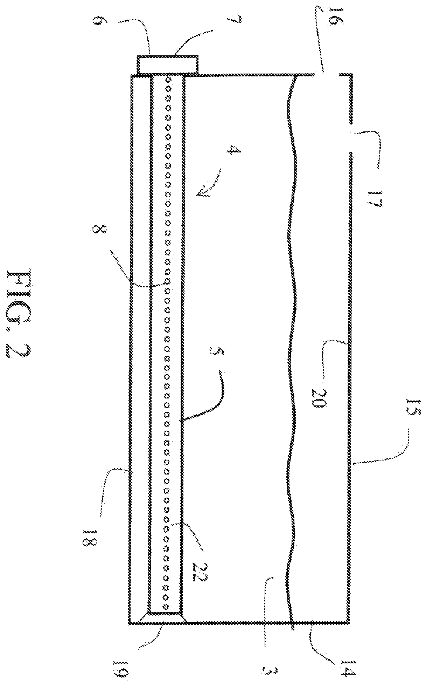

La cuve 2 comprend une surface interne 20, visible sur la figure 2, constituée d'un matériau moins réducteur que le cuivre ou qu'un alliage cuivreux.

De préférence, la surface interne 20 de la cuve 2 est réalisée en matériau du type matière plastique, par exemple polyéthylène ou en acier inoxydable.

Dans le mode de réalisation représenté sur les figures 1 et 2, la cuve 2 est réalisée en un seul matériau constituant en outre la surface interne 20.

La cuve 2 est peu coûteuse et facile à réaliser comparativement à une cuve en cuivre ou en alliage cuivreux.

Les cuves installées dans les sanitaires des véhicules ferroviaires sont généralement remplies d'eau lorsque le véhicule est en dépôt. L'eau de la cuve, si elle n'est pas puisée par le robinet, peut être amenée à stagner un ou plusieurs jours dans la cuve avant d'être renouvelée. Les bactéries présentes dans l'eau sont susceptibles de proliférer dans cette eau stagnante.

Comme visible sur la figure 1, le réservoir de stockage 1 de l'eau 3 comprend plusieurs moyens bactéricides 4. Un unique moyen bactéricide 4 est représenté sur la figure 2. Un moyen bactéricide 4 comprend un organe rigide 5 comprenant une surface de contact 22 avec l'eau 3.

La surface de contact externe 22 de l'organe rigide 5 est réalisée en alliage cuivreux ou en cuivre.

Dans le mode de réalisation représenté sur les figures 1 et 2, l'organe rigide 5 est constitué de cuivre ou d'un alliage cuivreux dont est, en outre, constituée la surface de contact 22 avec l'eau 3.

En variante, l'organe rigide est constitué d'un organe interne rigide réalisé dans un matériau différent du cuivre ou d'un alliage cuivreux, ledit organe interne étant recouvert d'une couche de cuivre ou d'un alliage cuivreux. La surface de contact 22 est la surface de la couche de cuivre ou d'un alliage cuivreux déposée sur l'organe interne.

L'organe rigide 5 d'un moyen bactéricide 4 est disposé à l'intérieur de la cuve 2 pour conserver l'eau 3 contenue dans le cuivre.

Plus particulièrement, dans le cas d'une cuve 2 de sanitaire d'un véhicule ferroviaire, un organe rigide 5 est introduit dans la cuve 2 pour conserver l'eau 3, contenue dans cette cuve 2, potable.

Sur la figure 1, un moyen bactéricide 4 est représenté en dehors de la cuve 2.

Trois moyens bactéricides 4 sont représentés, sur la figure 2, en position de purification de l'eau.

Il est connu que plus la surface de cuivre en contact avec l'eau est importante, plus la quantité de cuivre oxydé est grande. Ainsi, plus cette surface est importante, plus l'effet bactéricide du système sera élevé et les performances en terme de conservation d'une eau potable sont améliorées.

Dans le mode de réalisation représenté sur les figures 1 et 2, un organe rigide 5 est réalisé sous la forme d'un élément creux de manière à offrir une plus grande surface de contact 22 avec l'eau. L'organe rigide 5 creux présente une forme de conduit de manière à offrir une surface de contact 22 comprenant une surface de contact interne, non visible sur les figures 1 et 2, et une surface de contact externe avec l'eau.

L'organe rigide 5 est apte à être nettoyé mécaniquement.

L'organe rigide 5 est un organe d'un diamètre supérieur ou égal à 20mm.

De sorte à assurer une bonne rigidité de l'organe rigide, celui-ci a, par exemple, une épaisseur supérieure à un seuil prédéterminé dépendant de la rigidité du matériau dans lequel l'organe est réalisé.

Un organe rigide a, par exemple, une épaisseur supérieure à 0,5mm.

Dans le mode de réalisation représenté sur les figures 1 et 2, l'organe 10 rigide 5 est équipé de moyens 8 pour améliorer la circulation de l'eau contre ledit élément de cuivre 8.

Dans le mode de réalisation représenté sur les figures 1 et 2, les moyens 8 pour améliorer la circulation de l'eau contre la surface de contact de l'organe rigide 5 sont réalisés sous forme d'orifices 8 répartis sur toute la longueur de l'organe rigide 5.

Les orifices 8 favorisent l'oxydation du cuivre et les performances du réservoir pour désactiver et/ ou tuer les bactéries contenues dans le liquide 3.

De préférence, comme représenté sur les figures 1 et 2, on dispose les organes rigides 5 en partie basse de la cuve 2. De cette manière, ces éléments 20 baignent dans l'eau stagnante 3 et conservent l'eau potable, même lorsque la cuve 2 contient peu d'eau 3.

A cet effet, le moyen bactéricide 4 est fixé à une paroi latérale 14 de la cvue 2 de manière à ce que l'organe rigide 5 s'étende dans la direction horizontale en partie basse de cuve 2.

Dans un autre mode de réalisation, non représenté, un moyen bactéricide 4 est fixé à une paroi supérieure 1 5 ou inférieure 1 8 de la cuve 2 de manière à ce que l'organe rigide 5 associé s'étende depuis le fond de la cuve 2 vers le haut de la cuve.

Dans ce mode de réalisation, lorsque la cuve 2 contient peu d'eau 3, la surface de contact 22 en contact avec l'eau 3 est moins importante que dans le mode de réalisation précédent.

Chaque moyen bactéricide 4 est amovible. Chaque moyen bactéricide 4 peut être inséré dans la cuve 2 et retiré de celle-ci.

La cuve 2 comprend plusieurs passages 11 entre l'intérieur et l'extérieur de la cuve 2. Un passage 11 permet d'introduire un organe rigide 5 dans la cuve 2 et de retirer celui-ci de la cuve 2.

Un passage 11 est réalisé, dans le mode de réalisation représenté sur la figure 1, sous forme d'un orifice percé dans la paroi de la cuve 2.

Chaque orifice 11 présente une section plus grande ou sensiblement identique à la section d'un organe rigide 5.

Un moyen bactéricide 4 comprend un moyen de préhension 6 qui permet à un opérateur d'insérer, depuis l'extérieur de la cuve, l'élément de cuivre à l'intérieur de la cuve 2 par un passage 1 1 et de retirer, depuis l'extérieur de la cuve, ce même élément de cuivre 5 de la cuve par ledit moyen de passage 11. Lorsque un organe rigide 5 d'un moyen bactéricide 4 est inséré dans la cuve 2, le moyen de préhension 6 débouche à l'extérieur de la cuve 2. Le moyen de préhension 6 donne accès à l'organe rigide 5 depuis l'extérieur de la cuve 2.

Lorsqu'un élément de cuivre 5 est inséré ou retiré de la cuve 2, le passage 11 est fermé de manière étanche au moyen d'un moyen de fermeture 7 fixé de manière étanche à une paroi de la cuve 2. Le moyen de fermeture 7 est fixé à la 20 paroi, par exemple au moyen de vis ou tout autre moyen de fixation démontable.

Dans le mode de réalisation représenté sur les figures 1 et 2, le moyen de préhension 6 forme le moyen de fermeture 7.

Un moyen de préhension 6 est fixé à l'extrémité d'un élément de cuivre 5. Il est par exemple, vissé à l'élément en cuivre.

Un moyen de préhension 6 est un élément non cuivrique, par exemple de l'inox. De cette manière, le coût du réservoir est limité.

En variante, un moyen de préhension 6 est un élément en cuivre ou alliage cuivreux. Dans cette variante, le moyen de préhension 6 et l'organe rigide 5 forme un élément monobloc en cuivre.

Un moyen de préhension 6 a une section supérieure à celle de l'orifice 1 1 de sorte à déboucher à l'extérieur de la cuve lorsque l'organe rigide 5 est inséré dans la cuve 2.

Ainsi, le moyen de préhension 6 a une double fonction de fermeture étanche d'un passage 1 1 et de préhension de l'organe rigide 5.

La fixation du moyen de préhension 6 à la cuve maintient en outre, l'organe rigide 5 dans une position fixe, à l'intérieur de la cuve 2.

On a prévu un moyen de fixation 19 de l'extrémité de l'organe rigide 5 opposée au moyen de préhension.

Ce moyen de fixation 19 est un plot fixé à la paroi opposée à la première paroi, dans lequel vient s'encastrer l'organe rigide 5.

Le moyen de fixation 1 9 améliore la fixité de l'organe rigide 5.

Sur le mode de réalisation représenté sur les figures 1 et 2, les moyens de préhension 6 sont fixés à une paroi latérale 14 de la cuve 2.

La surface de contact 22 de l'organe rigide 5 s'étend dans la direction horizontale, entre deux parois latérales 14 se faisant face.

En variante, le moyen de préhension 6 est fixé à la paroi supérieure 15 ou inférieure 18 de la cuve 2.

La fixation du moyen de préhension 6 à la paroi supérieure 15 de la cuve assure une bonne étanchéité car le moyen de fermeture 7 du passage 11 n'est pas en contact avec de l'eau dès que la cuve 2 n'est pas complètement remplie d'eau 3.

Nous allons maintenant décrire le fonctionnement du réservoir de conservation d'un liquide selon l'invention ainsi qu'un procédé pour conserver un liquide.

On insère un organe rigide 5 dans la cuve 2 en enfonçant l'organe rigide 5 dans un passage 11 au moyen du moyen de préhension 6.

On ferme ensuite le passage 11 en fixant le moyen de fermeture 7 à la paroi 14 de la cuve 2.

Dans le mode de réalisation représenté sur les figures 1 et 2, le moyen de préhension 6 constituant le moyen de fermeture 7, on enfonce l'organe rigide 5 dans la cuve 2 jusqu'à ce que le moyen de préhension 6 soit collé à une paroi de la cuve 2 et forme un bouchon de fermeture du moyen de passage 11.

Le moyen de préhension 6 est ensuite fixé à la paroi 7.

L'organe rigide 5 est ainsi en position de purification du liquide qui vient au contact de sa surface de contact 22.

Dans cette position, le cuivre de la surface de contact 22 de l'organe rigide 5 avec l'eau, s'oxyde et forme une couche d'oxyde de cuivre.

Afin d'assurer la conservation du liquide issu de chaque nouveau remplissage de la cuve, dans une cuve apte à être vidangée et remplie une multitude de fois, il est nécessaire soit de remplacer l'organe rigide 5 soit de remplacer couche de surface en cuivre ou en alliage cuivreux de celui-ci, soit de nettoyer la surface de contact 22 de l'organe rigide 5 après chaque vidange pour 10 enlever la couche d'oxyde de cuivre.

Pour enlever la couche d'oxyde, une solution consiste à laver la surface 22 de l'organe rigide 5 au moyen d'un produit chimique du type acide citrique ou à un nettoyer mécanique de la surface de contact de l'organe rigide.

Le nettoyage mécanique d'un organe rigide 5 consiste, par exemple, à 15 frotter celui-ci au moyen d'une brosse en matériau plus dur que le cuivre, par exemple, une brosse en acier ou tout autre élément abrasif.

Ce type de nettoyage permet de supprimer, par abrasion, la couche d'oxyde de cuivre formée en surface d'un organe rigide 5, lors de l'oxydation du cuivre.

Les opérations de nettoyage de la surface de contact 22 de l'organe rigide 5, de remplacement de cette surface de contact 22 ou de remplacement de l'organe rigide 5 sont réalisées soit depuis l'intérieur, soit depuis l'extérieur de la cuve 2.

La réalisation d'une de ces opérations depuis l'extérieur de la cuve 25 nécessite l'extraction de l'organe rigide 5 de la cuve 2.

L'extraction de l'organe rigide 5 de la cuve 2 est réalisée en ouvrant un passage 11. L'ouverture du passage 11 est réalisée en désolidarisant le moyen de fermeture 7 de la cuve 2.

On tire ensuite sur le moyen de préhension 6, depuis l'extérieur de la cuve 2, pour extraire l'organe rigide 5 de la cuve 2, par le passage 11.

Un réservoir de stockage d'un liquide selon l'invention présente l'avantage de conserver une grande quantité de liquide à moindres coûts. Un tel réservoir permet d'assurer la conservation d'un liquide sur plusieurs cycles de remplissage et vidange de la cuve. Le nettoyage mécanique de l'organe rigide permet d'assurer une telle conservation à bas coût.

Il n'est pas nécessaire d'ouvrir ou de démonter la cuve pour avoir accès à un organe rigide. En effet, un organe rigide est accessible depuis l'extérieur du réservoir pour nettoyer ledit organe ou l'échanger avec un autre organe rigide.

Une maintenance rapide du réservoir peut ainsi être assurée.

De plus, les organes rigides du réservoir selon l'invention pouvant être nettoyés mécaniquement, une eau potable peut être conservée dans ledit reservoir.

La taille, ou le diamètre, importants de l'élément rigide facilitent le nettoyage mécanique de sa surface.

Un tel organe présente, en outre, une grande surface de contact avec le liquide.

Une épaisseur importante de l'organe rigide renforce la rigidité de celui-ci de sorte à faciliter le nettoyage mécanique de sa surface.

## Revendications

1. Réservoir (1) de stockage d'un liquide (3) comportant :
- une cuve (2) de stockage dudit liquide (3) constituée à sa surface interne (20) d'un matériau moins réducteur que le cuivre, la cuve présentant au moins une première paroi, notamment une paroi latérale (14), inférieure (18) ou supérieure (15),
- au moins un moyen bactéricide (4) offrant une surface de contact (22) avec ledit liquide (3), ladite surface de contact (22) étant constituée de cuivre ou d'un alliage cuivreux,
**caractérisé en ce que** :
- la surface de contact (22) est la surface d'un organe rigide (5) qui est disposé à l'intérieur de ladite cuve (2),
- la cuve (2) comprend, pour chaque organe rigide (5), un passage (11) permettant de passer ledit organe rigide (5) entre l'intérieur et l'extérieur de la cuve (2), sous la forme d'un orifice percé dans la première paroi (14, 18, 15).
- au moins un moyen bactéricide (4) comprend un organe rigide (5) qui est réalisé sous la forme d'un élément creux, notamment sous une forme de conduit présentant une surface de contact interne et une surface de contact externe avec l'eau.

2. Réservoir (1) de stockage d'un liquide (3) selon la revendication précédente, **caractérisé en ce qu'**au moins un moyen bactéricide (4) est amovible.

3. Réservoir (1) de stockage d'un liquide (3) selon l'une quelconque des revendications précédentes, **caractérisé en ce qu'**au moins un moyen bactéricide (4) comprend un organe rigide (5) ayant un diamètre supérieur ou égal à 20 millimètres.

4. Réservoir (1) de stockage d'un liquide (3) selon l'une quelconque des revendications précédentes, **caractérisé en ce qu'**au moins un moyen bactéricide (4) comprend un organe rigide (5) ayant une épaisseur supérieure à 0,5 millimètres.

5. Réservoir (1) de stockage d'un liquide (3) selon l'une quelconque des revendications précédentes, **caractérisé en ce qu'**au moins un moyen bactéricide (4) comprend un organe rigide (5) équipé de moyens (8) pour améliorer la circulation de l'eau contre ledit orgone rigide (5).

6. Réservoir (1) de stockage d'un liquide (3) selon la revendication précédente, **caractérisé en ce que** les moyens (8) pour améliorer la circulation de l'eau contre l'organe rigide (5) sont réalisés sous forme d'orifices répartis sur toute la longueur dudit organe (5).

7. Réservoir (1) de stockage d'un liquide (3) selon l'une des revendications précédentes, **caractérisé en ce qu'**ou moins un moyen bactéricide (4) comprend un moyen de préhension (6) débouchant à l'extérieur de la cuve (2) lorsque ledit organe rigide (5) est inséré dans la cuve (2).

8. Réservoir (1) de stockage d'un liquide (3) selon l'une des revendications précédentes, **caractérisé en ce que** la cuve (2) présente une seconde paroi opposée à la première paroi, des moyens (19) de fixation d'une extrémité de l'organe rigide (5) étant agencés sur cette seconde paroi.

9. Réservoir (1) de stockage d'un liquide (3) selon l'une quelconque des revendications précédentes, **caractérisé en ce qu'**il comprend un moyen de fermeture (7) de chaque passage (11).

10. Réservoir (1) de stockage d'un liquide (3) selon la revendication 9, **caractérisé en ce qu'**ou moins un moyen de fermeture (7) est formé d'un moyen de préhension (6).

11. Réservoir (1) de stockage d'un liquide (3) selon l'une des revendications précédentes, **caractérisé en ce qu'**ou moins un desdits moyens bactéricides (4) est agencé de manière à ce que l'organe rigide (5) s'étende en partie basse de la cuve (2).

12. Réservoir (1) de stockage d'un liquide (3) selon l'une des revendications précédentes, **caractérisé en ce que** la surface interne (20) de la cuve (2) de stockage est réalisée en matière plastique, notamment en polyéthylène, ou en acier inoxydable.

13. Procédé de stockage d'un liquide (3) dans un réservoir (1) de stockage d'un liquide (3) selon l'une des revendications précédentes, **caractérisé en ce qu'**il comprend les étapes suivantes :
- insérer un organe rigide (5), comprenant une surface de contact (22) constituée de cuivre ou d'un alliage cuivreux, dans la cuve (2), à travers un passage (11) ménagé dans la première paroi latérale (14) de la cuve (2),
- remplir la cuve (2) de liquide (3),
- nettoyer la surface de contact (22) ou remplacer la surface de contact (22) par une surface de contact (22) similaire ou remplacer l'organe rigide (22) par un organe rigide (22) similaire.

14. Procédé de stockage d'un liquide (3) dans un réservoir (1) de stockage d'un liquide selon la revendication précédente, **caractérisé en ce que** le nettoyage de la surface de contact (22) est un nettoyage mécanique.

15. Procédé de stockage d'un liquide (3) selon la revendication 13 ou 14, **caractérisé en ce que** :
- préalablement à l'étape de nettoyage mécanique de la surface de contact (22) ou de remplacement de la surface de contact (22) par une surface de contact (22) similaire ou de remplacement de l'organe rigide (22) par un organe rigide (22) similaire, on réalise, depuis l'extérieur de la cuve (2), une étape d'extraction de l'organe rigide (5) de la cuve (2) ;
- ultérieurement à l'étape de nettoyage mécanique de la surface de contact (22) ou de remplacement de la surface de contact (22) par une surface de contact (22) similaire ou de remplacement de l'organe rigide (22) par un organe rigide (22) similaire, on réalise, depuis l'extérieur de la cuve (2), une étape d'insertion d'un organe rigide (5) dans la cuve (2).

## Patentansprüche

1. Speicherbehälter (1) für eine Flüssigkeit (3), aufweisend:
- ein Speichergefäß (2) für die besagte Flüssigkeit (3), dessen innere Fläche (20) aus einem Material, das weniger reduzierend ist als Kupfer, zusammengesetzt ist, wobei das Gefäß wenigstens eine erste Wand aufweist, insbesondere eine Seitenwand (14), untere Wand (18) oder obere Wand (15),
- wenigstens ein bakterizides Mittel (4), welches eine Kontaktfläche (22) mit besagter Flüssigkeit (3) aufweist, wobei besagte Kontaktfläche (22) aus Kupfer oder einer Kupferlegierung zusammengesetzt ist,
**dadurch gekennzeichnet, dass**:
- die Kontaktfläche (22) die Fläche eines starren Organs (5) ist, das an der Innenseite des besagten Gefäßes (2) angeordnet ist,
- das Gefäß (2) für jedes starre Organ (5) einen Durchlass (11) in Form einer Öffnung, die die erste Wand (14, 18, 15) durchdringt, aufweist, welcher das Passieren des besagten starren Organs (5) zwischen der Innenseite und der Außenseite des Gefäßes (2) ermöglicht,
- wenigstens ein bakterizides Mittel (4) ein starres Organ (5) aufweist, das in Form eines hohlen Elements realisiert ist, insbesondere in Form eines Rohrs, das eine innere Kontaktfläche und eine äußere Kontaktfläche mit Wasser aufweist.

2. Speicherbehälter (1) für eine Flüssigkeit (3) gemäß dem vorangegangenen Anspruch, **dadurch gekennzeichnet, dass** wenigstens ein bakterizides Mittel (4) herausnehmbar ist.

3. Speicherbehälter (1) für eine Flüssigkeit (3) gemäß irgendeinem der vorangegangenen Ansprüche, **dadurch gekennzeichnet, dass** wenigstens ein bakterizides Mittel (4) ein starres Organ (5) mit einem Durchmesser größer oder gleich 20 mm aufweist.

4. Speicherbehälter (1) für eine Flüssigkeit (3) gemäß irgendeinem der vorangegangenen Ansprüche, **dadurch gekennzeichnet, dass** wenigstens ein bakterizides Mittel (4) ein starres Organ (5) mit einer Dicke größer als 0,5 mm aufweist.

5. Speicherbehälter (1) für eine Flüssigkeit (3) gemäß irgendeinem der vorangegangenen Ansprüche, **dadurch gekennzeichnet, dass** wenigstens ein bakterizides Mittel (4) ein starres Organ (5) aufweist, das mit Mitteln (8) zum Verbessern der Wasserzirkulation gegen besagtes starres Organ (5) ausgestattet ist.

6. Speicherbehälter (1) für eine Flüssigkeit (3) gemäß dem vorangegangenen Anspruch, **dadurch gekennzeichnet, dass** die Mittel (8) zum Verbessern der Wasserzirkulation gegen das starre Organ (5) in Form von Öffnungen realisiert sind, die über die ganze Länge des besagten Organs (5) verteilt sind.

7. Speicherbehälter (1) für eine Flüssigkeit (3) gemäß einem der vorangegangenen Ansprüche, **dadurch gekennzeichnet, dass** wenigstens ein bakterizides Mittel (4) ein Handhabe-Mittel (6) aufweist, das auf der Außenseite des Gefäßes (2) mündet, wenn besagtes starres Organ (5) in das Gefäß (2) eingefügt ist.

8. Speicherbehälter (1) für eine Flüssigkeit (3) gemäß einem der vorangegangenen Ansprüche, **dadurch gekennzeichnet, dass** das Gefäß (2) eine zweite Wand aufweist, die gegenüber der ersten Wand ist, wobei Mittel (19) zur Befestigung eines Endes des starren Organs (5) an dieser zweiten Wand angeordnet sind.

9. Speicherbehälter (1) für eine Flüssigkeit (3) gemäß irgendeinem der vorangegangenen Ansprüche, **dadurch gekennzeichnet, dass** er ein Verschlussmittel (7) für jeden Durchlass (11) aufweist.

10. Speicherbehälter (1) für eine Flüssigkeit (3) gemäß Anspruch 9, **dadurch gekennzeichnet, dass** wenigstens ein Verschlussmittel (7) aus einem Handhabe-Mittel (6) gebildet ist.

11. Speicherbehälter (1) für eine Flüssigkeit (3) gemäß einem der vorangegangenen Ansprüche, **dadurch gekennzeichnet, dass** wenigstens eines der besagten bakteriziden Mittel (4) derart angeordnet ist, dass das starre Organ (5) sich im unteren Teil des Gefäßes (2) erstreckt.

12. Speicherbehälter (1) für eine Flüssigkeit (3) gemäß einem der vorangegangenen Ansprüche, **dadurch gekennzeichnet, dass** die innere Fläche (20) des Speichergefäßes (2) aus Kunststoffmaterial realisiert ist, insbesondere aus Polyethylen oder rostfreiem Stahl.

13. Verfahren zum Speichern einer Flüssigkeit (3) in einem Speicherbehälter (1) für eine Flüssigkeit (3) gemäß einem der vorangegangenen Ansprüche, **dadurch gekennzeichnet, dass** es die folgenden Schritte aufweist:
- Einfügen eines starren Organs (5), welches eine Kontaktfläche (22) aufweist, die aus Kupfer oder einer Kupferlegierung zusammengesetzt ist, in das Gefäß (2) durch einen Durchlass (11) hindurch, der in der ersten Seitenwand (14) des Gefäßes (2) vorgesehen ist,
- Füllen des Gefäßes (2) mit der Flüssigkeit (3),
- Reinigen der Kontaktfläche (22) oder Ersetzen der Kontaktfläche (22) durch eine gleichartige Kontaktfläche (22) oder Ersetzen des starren Organs (22) durch ein gleichartiges, starres Organ (22).

14. Verfahren zum Speichern einer Flüssigkeit (3) in einem Speicherbehälter (1) für eine Flüssigkeit gemäß dem vorangegangenen Anspruch, **dadurch gekennzeichnet, dass** das Reinigen der Kontaktfläche (22) ein mechanisches Reinigen ist.

15. Verfahren zum Speichern einer Flüssigkeit (3) gemäß Anspruch 13 oder 14, **dadurch gekennzeichnet, dass**:
- vor dem Schritt des mechanischen Reinigens der Kontaktfläche (22) oder des Ersetzens der Kontaktfläche (22) durch eine gleichartige Kontaktfläche (22) oder des Ersetzens des starren Organs (22) durch ein gleichartiges, starres Organ (22) ein Schritt des Entfernens des starren Elements (5) aus dem Gefäß (2) von der Außenseite des Gefäßes (2) her realisiert wird,
- nach dem Schritt des mechanischen Reinigens der Kontaktfläche (22) oder des Ersetzens der Kontaktfläche (22) durch eine gleichartige Kontaktfläche (22) oder des Ersetzens des starren Organs (22) durch ein gleichartiges, starres Organ (22) ein Schritt des Einfügen eines starren Organs (5) in das Gefäß (2) von der Außenseite des Gefäßes (2) her realisiert wird.

## Claims

1. Tank (1) for storing a liquid (3), comprising:
- a container (2) for storing said liquid (3), which container is constituted on its inner surface (20) by a material which is less reducing than copper, the container having at least a first wall, especially a side wall (14), bottom wall (18) or top wall (15),
- at least one bactericidal means (4) providing a contact surface (22) with said liquid (3), said contact surface (22) being constituted by copper or a copper alloy,
**characterised in that**:
- the contact surface (22) is the surface of a rigid member (5) which is arranged inside said container (2),
- the container (2) comprises, for each rigid member (5), a passage (11) allowing said rigid member (5) to pass between the inside and the outside of the container (2), in the form of an orifice drilled in the first wall (14, 18, 15),
- at least one bactericidal means (4) comprises a rigid member (5) which is in the form of a hollow element, especially in the form of a conduit having an inner contact surface and an outer contact surface with the water.

2. Tank (1) for storing a liquid (3) according to the preceding claim, **characterised in that** at least one bactericidal means (4) is removable.

3. Tank (1) for storing a liquid (3) according to any one of the preceding claims, **characterised in that** at least one bactericidal means (4) comprises a rigid member (5) having a diameter greater than or equal to 20 millimetres.

4. Tank (1) for storing a liquid (3) according to any one of the preceding claims, **characterised in that** at least one bactericidal means (4) comprises a rigid member (5) having a thickness greater than 0.5 millimetres.

5. Tank (1) for storing a liquid (3) according to any one of the preceding claims, **characterised in that** at least one bactericidal means (4) comprises a rigid member (5) equipped with means (8) for improving the flow of the water against said rigid member (5).

6. Tank (1) for storing a liquid (3) according to the preceding claim, **characterised in that** the means (8) for improving the flow of the water against the rigid member (5) are in the form of orifices distributed over the entire length of said member (5).

7. Tank (1) for storing a liquid (3) according to any one of the preceding claims, **characterised in that** at least one bactericidal means (4) comprises a gripping means (6) which emerges on the outside of the container (2) when said rigid member (5) is inserted into the container (2).

8. Tank (1) for storing a liquid (3) according to any one of the preceding claims, **characterised in that** the container (2) has a second wall opposite the first wall, means (19) for fixing an end of the rigid member (5) being arranged on the second wall.

9. Tank (1) for storing a liquid (3) according to any one of the preceding claims, **characterised in that** it comprises a closing means (7) for each passage (11).

10. Tank (1) for storing a liquid (3) according to claim 9, **characterised in that** at least one closing means (7) is formed by a gripping means (6).

11. Tank (1) for storing a liquid (3) according to any one of the preceding claims, **characterised in that** at least one of said bactericidal means (4) is so arranged that the rigid member (5) extends in the bottom portion of the container (2).

12. Tank (1) for storing a liquid (3) according to any one of the preceding claims, **characterised in that** the inner surface (20) of the storage container (2) is made of plastics material, especially of polyethylene, or of stainless steel.

13. Method for storing a liquid (3) in a tank (1) for storing a liquid (3) according to any one of the preceding claims, **characterised in that** it comprises the following steps:
- inserting a rigid member (5), comprising a contact surface (22) constituted by copper or a copper alloy, into the container (2) through a passage (11) formed in the first side wall (14) of the container (2),
- filling the container (2) with liquid (3),
- cleaning the contact surface (22) or replacing the contact surface (22) with a similar contact surface (22) or replacing the rigid member (22) with a similar rigid member (22).

14. Method for storing a liquid (3) in a tank (1) for storing a liquid according to the preceding claim, **characterised in that** cleaning of the contact surface (22) is mechanical cleaning.

15. Method for storing a liquid (3) according to claim 13 or 14, **characterised in that**:
- prior to the step of mechanically cleaning the contact surface (22) or of replacing the contact surface (22) by a similar contact surface (22) or of replacing the rigid member (22) by a similar rigid member (22), a step of removing the rigid member (5) from the container (2) is carried out from outside the container (2);
- following the step of mechanically cleaning the contact surface (22) or of replacing the contact surface (22) by a similar contact surface (22) or of replacing the rigid member (22) by a similar rigid member (22), a step of inserting a rigid member (5) into the container (2) is carried out from outside the container (2).
